# EUROPÄISCHE PATENTANMELDUNG

(11) **EP 1 936 567 A1**
(43) Veröffentlichungstag der Anmeldung: **25.06.2008**
(21) Anmeldenummer: 07024554.3
(22) Anmeldetag: 18.12.2007
(51) Int. Cl.: G06T 7/00

(54) **Qualitätskontrolle von Aufdrucken**

(30) Priorität: 22.12.2006 DE 102006061008
(71) Anmelder: Wolke Inks & Printers GmbH, 91217 Hersbruck (DE)
(72) Erfinder: Keller, Wolfgang, 91217 Hersbruck (DE)
(74) Vertreter: Müller-Boré & Partner Patentanwälte

(57) **Zusammenfassung**

Um eine Qualitätsüberprüfung eines Aufdrucks an einem zu bedruckenden Objekt zu vereinfachen und eine Effizienzsteigerung zu ermöglichen, ist ein System, Verfahren sowie Computerprogrammprodukt zur automatischen Kontrolle von zumindest einem zu bedruckenden Objekt vorgesehen und umfassend:
- einen ersten Prozessor, welcher ausgelegt ist, zumindest ein aufzubringendes Druckbild für das zumindest eine Objekt zu erfassen, umfassend:
- eine Verarbeitungseinrichtung, welche ausgelegt ist, das aufzubringende Druckbild in erste Druckdaten umzuwandeln;
- einen digitalen Referenz-Speicher, welcher ausgelegt ist, die erste Druckdaten zu speichern;
- eine erste Ausgabeeinrichtung, welche ausgelegt ist, die erste Druckdaten an ein Informationsübertragungsmittel zu übertragen, wobei das Informationsübertragungsmittel ausgelegt ist, zumindest einen der ersten Druckdaten entsprechenden Aufdruck an dem Objekt anzubringen; und
- eine zweite Ausgabeeinrichtung, welche ausgelegt ist, die erste Druckdaten an eine Vergleichseinrichtung zu übertragen; und

- einen zweiten Prozessor, welcher ausgelegt ist, dem Aufdruck entsprechende zweite Druckdaten zu erfassen, umfassend:
- einen digitalen Ergebnis-Speicher, welcher ausgelegt ist, die zweite Druckdaten zu speichern; und
- die Vergleichseinrichtung, welche ausgelegt ist, eine Qualität des Aufdrucks zu bestimmen und zwar durch Vergleich der ersten Druckdaten mit den zweiten Druckdaten.

## Beschreibung

Die vorliegende Erfindung bezieht sich generell auf eine Lösung zur Überprüfung einer Druckqualität. Spezifischer bezieht sich die vorliegende Erfindung auf ein System, eine computer-implementiertes Verfahren und ein Computerprogrammprodukt zur automatischen Kontrolle zu bedruckender Objekte der Massenfertigung an einem Produktionsort.

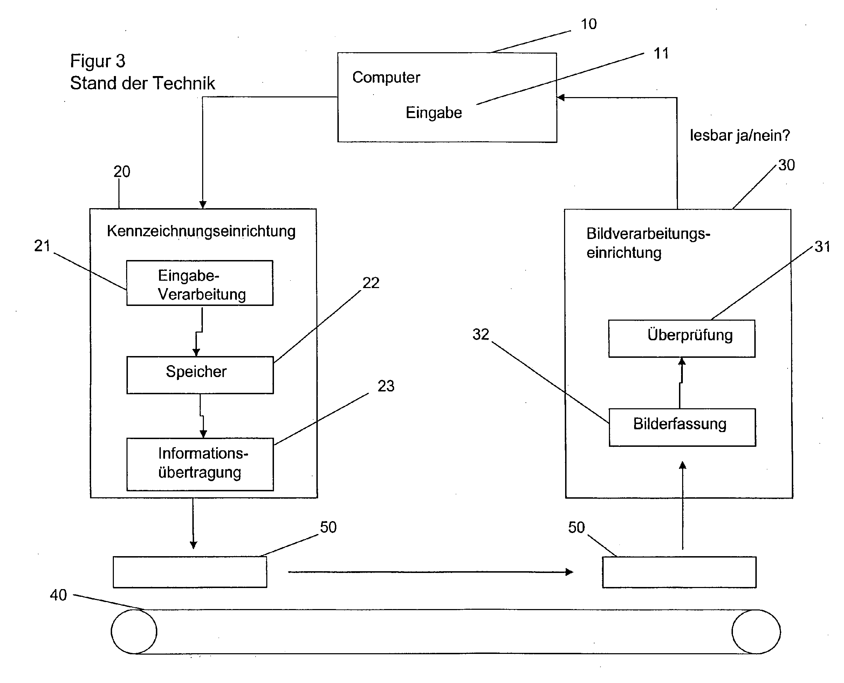

Bezugnehmend auf Figur 3 ist ein bekanntes System und Verfahren zur Überprüfung einer Lesbarkeit eines Aufdrucks, wie beispielsweise ein Barcode oder ein Text, an einem Objekt 50 (z.B. ein Gegenstand der Massenfertigung wie beispielsweise eine Verpackung) an einem Produktionsort entlang einer Zuführungseinrichtung 40 gezeigt. Ein solches System umfaßt einen zentralen Computer 10, welcher eine Eingabe 11 (z.B. einen Text oder einen Barcode) zum Bedrucken des Objektes 50 vorgibt, eine Kennzeichnungseinrichtung 20 (z.B. einen Drucker) und eine Bildverarbeitungseinrichtung 30 (z.B. eine Digitalkamera, eine Videokamera, oder ein Scanner).

Die Kennzeichnungseinrichtung 20 empfängt von dem Computer 10 die Eingabe 11, entsprechend welcher das Objekt 50 bedruckt werden soll. Die Eingabe 11 wird zunächst in einer Eingabeverarbeitungseinrichtung 21 der Kennzeichnungseinrichtung 20 verarbeitet. Dabei wird ein pixelweiser Bildsatz, bevorzugt eine Rastergraphik, erzeugt und in einem Speicher 22 der Kennzeichnungseinrichtung 20 (zumindest zeitweise) gespeichert. Die Rastergraphik dient als Vorlage für ein Informationsübertragungsmittel 23 der Kennzeichnungseinrichtung 20. Das Informationsübertragungsmittel 23 bedruckt pixelweise entsprechend der Rastergraphik das Objekt 50. Über eine Zuführungseinrichtung 40 passiert das durch das Informationsübertragungsmittel 23 mit einem dem Rasterbild entsprechenden Aufdruck bedruckte Objekt 50 die Bildverarbeitungseinrichtung 30. Eine Bilderfassungseinrichtung 32 der Bildverarbeitungseinrichtung 30 erfaßt den durch das Informationsübertragungsmittel 23 angebrachten Aufdruck an dem bedruckten Objekt 50. Die Bilderfassungseinrichtung 32 erzeugt aus dem erfaßten Aufdruck ein pixelweises Bild (z.B. eine Rastergraphik), welches in einer Überprüfungseinrichtung 31 hinsichtlich seiner Lesbarkeit überprüft wird.

Um die Lesbarkeit des erfaßten Aufdrucks zu überprüfen, wird zuvor die Bilderfassungseinrichtung 32 entsprechend eingeteacht. Entsprechend erlernt die Bilderfassungseinrichtung 32, an welcher Positionen des bedruckten Objekts 50 sich der zu erfassende Aufdruck befindet und an welcher Position des bedruckten Objekts 50 beispielsweise eine entsprechende Einheit zu erfassen ist. Demnach werden die zu überprüfenden Bilddaten gemäß der Eingabe 11 der Bilderfassungseinrichtung 32 eingeteacht. Entsprechend der Einteachung wird der Aufdruck an dem Objekt von der Bilderfassungseinrichtung 32 (zumindest teilweise) erfaßt und in ein pixelweises Bild, insbesondere eine Rastergraphik, umgewandelt. Eine Überprüfungseinrichtung 31 überprüft anschließend die Lesbarkeit der erfaßten Rastergraphik. Dazu wird üblicherweise eine Verfahren der optischen Zeichenerkennung (Abkürzung OCR von dem englischen Ausdruck "Optical Character Recognition") verwendet. Dem OCR Verfahren geht üblicherweise eine globale Strukturerkennung voraus. Ausgangspunkt für das OCR Verfahren ist eine von der Bilderfassungseinrichtung 32 erzeugte Rastergraphik von dem Aufdruck an dem Objekt 50. In einem ersten Schritt wird die Rastergraphik in relevante Bereiche, wie beispielsweise Text oder einen Barcode, und irrelevante Bereiche, wie beispielsweise Weißflächen und Linien, aufgeteilt. In einem zweiten Schritt erfolgt eine Mustererkennung, welche Fehlerkorrekturen umfaßt, wobei die Fehlerkorrekturen sowohl auf der Pixelebene der Rastergraphik als auch auf Zeichen- und Wortebene erfolgen. Ein einem dritten Schritt erfolgt eine Erzeugung einer Ausgabe in einem geeigneten Format entweder in einer Datenbank oder in einer Textdatei. Die Ausgabe umfaßt eine Spezifikation der Qualität der Lesbarkeit des Aufdrucks an dem Objekt 50.

Entsprechend sind in einem solchen System und Verfahren zur Überprüfung einer Lesbarkeit eines Aufdrucks wie beispielsweise eines Barcodes an einem Objekt, eine Kennzeichnungseinrichtung und eine Bildverarbeitungseinrichtung voneinander getrennt. Entsprechend kommunizieren die Kennzeichnungseinrichtung und die Bildverarbeitungseinrichtung auch nicht miteinander. Demzufolge müssen relevante Prozeßdaten für eine Überprüfung einer Lesbarkeit eines Aufdrucks an einem Objekt, durch zeit- und kostenintensives Einteachen einer Eingabe einer Bilderfassungseinrichtung übermittelt werden. Außerdem kann das Einteachen fehlerhaft sein. Weiterhin muß eine verhältnismäßig aufwendige optische Zeichenerkennung (OCR) erfolgen, um eine Lesbarkeit des Aufdrucks und damit eine Qualität des Aufdrucks zu überprüfen.

Aufgabe der vorliegenden Erfindung ist es, eine vereinfachte und (bezüglich Zeit und/oder Kosten) effizientere Qualitätsüberprüfung eines Aufdrucks an einem zu bedruckenden Objekt zu ermöglichen.

Diese Aufgabe ist entsprechend der Erfindung durch die Merkmale der unabhängigen Ansprüche gelöst. Bevorzugte Ausführungsformen der Erfindung sind Gegenstand der abhängigen Ansprüche.

Entsprechend der Erfindung ist ein System zur automatischen Kontrolle von zumindest einem zu bedruckenden Objekt vorgesehen, umfassend:
- einen ersten Prozessor, welcher ausgelegt ist, zumindest ein aufzubringendes Druckbild für das zumindest eine Objekt zu erfassen bzw. zu erhalten, umfassend:
   - eine Verarbeitungseinrichtung, welche ausgelegt ist, das aufzubringende Druckbild in erste Druckdaten (insbesondere eine erste Vielzahl von Pixeln bzw. in entsprechende erste Daten) umzuwandeln;
   - einen digitalen Referenz-Speicher, welcher ausgelegt ist, die ersten Druckdaten (insbesondere erste Vielzahl von Pixeln bzw. die entsprechenden ersten Daten) (zumindest zeitweise bzw. flüchtig) zu speichern;
   - eine erste Ausgabeeinrichtung, welche ausgelegt ist, die ersten Druckdaten (insbesondere die erste Vielzahl von Pixeln bzw. die entsprechenden ersten Daten) an ein Informationsübertragungsmittel zu übertragen, wobei das Informationsübertragungsmittel ausgelegt ist, zumindest einen den ersten Druckdaten (insbesondere der ersten Vielzahl von Pixeln bzw. die entsprechenden ersten Daten) entsprechenden Aufdruck an dem Objekt anzubringen; und
   - eine zweite Ausgabeeinrichtung, welche ausgelegt ist, die ersten Druckdaten (insbesondere die erste Vielzahl von Pixeln bzw. die entsprechenden ersten Daten) an eine Vergleichseinrichtung zu übertragen; und
- einen zweiten Prozessor, welcher ausgelegt ist, dem Aufdruck entsprechende zweite Druckdaten (insbesondere die zweite Vielzahl von Pixeln bzw. entsprechende zweite Daten) zu erfassen bzw. zu detektieren, umfassend:
   - einen digitalen Ergebnis-Speicher, welcher ausgelegt ist, die zweiten Druckdaten (insbesondere die zweite Vielzahl von Pixeln bzw. entsprechende zweite Daten) (zumindest zeitweise bzw. flüchtig) zu speichern; und
   - die Vergleichseinrichtung, welche ausgelegt ist, eine Qualität des Aufdrucks zu bestimmen und zwar durch Vergleich der ersten Druckdaten (insbesondere der ersten Vielzahl von Pixeln bzw. der entsprechenden ersten Daten) mit den zweiten Druckdaten (insbesondere der zweiten Vielzahl von Pixeln bzw. den entsprechenden zweiten Daten).

Entsprechend kann ein erster Prozessor, insbesondere eine Druckeinheit, in einer Kennzeichnungseinrichtung, wie beispielsweise einem Drucker lokalisiert sein. Eine zweiter Prozessor, insbesondere eine Kontrolleinheit, kann in einer Bildverarbeitungseinrichtung, wie beispielsweise einer Digitalkamera oder einer Videokamera lokalisiert sein. Ferner stehen der erste Prozessor und der zweite Prozessor in Verbindung, weil der zweite Prozessor eine erste Vielzahl von Pixeln bzw. die entsprechenden ersten Daten, welche als Vorlage bzw. Instruktionen bzw. Steuerdaten zum Bedrucken des zumindest einen zu bedruckenden Objektes verwendet werden, von dem ersten Prozessor empfängt. Somit kennt der zweite Prozessor eine Vorlage bzw. die Steuerdaten für einen Aufdruck, welcher zuvor von einem Informationsübertragungsmittel, welches die erste Vielzahl von Pixeln bzw. die entsprechenden ersten Daten von dem ersten Prozessor empfängt, an dem zu bedruckenden Objekt angebracht wurde. Entsprechend reicht es bei einer Bestimmung einer Qualität des Aufdrucks an dem Objekt aus, die erste Vielzahl von Pixeln bzw. die entsprechenden ersten Daten, welche als Druckvorlage bzw. als Steuerdaten dient/dienen, mit einer zweiten Vielzahl von Pixeln bzw. entsprechenden zweiten Daten, welche vom dem zweite Prozessor erfaßt bzw. detektiert wird/werden, zu vergleichen. Die zweite Vielzahl von Pixeln entspricht (zumindest teilweise) im Wesentlichen dem Aufdruck an dem Objekt und kann durch eine Bilderfassungseinrichtung (z.B. einer CCD-Kamera) erfaßt und an den zweiten Prozessor übertragen sein.

Entsprechend ist für eine Überprüfung einer Qualität eines Aufdrucks an einem Objekt keine Prüfung eines zu erkennenden Sinnes bzw. Bedeutungsinhalts des Aufdrucks notwendig. Entsprechend ist es lediglich notwendig, die erste Vielzahl von Pixeln bzw. die entsprechenden ersten Daten, welche als Vorlage bzw. Steuerdaten für einen Aufdruck an dem Objekt dient, mit einer zweiten Vielzahl von Pixeln bzw. den entsprechenden zweiten Daten, welche einem Ergebnis des Aufdrucks an dem Objekt (zumindest teilweise) im Wesentlichen entspricht, zu vergleichen. Dazu wird die erste Vielzahl von Pixeln bzw. die entsprechenden ersten Daten zumindest zeitweise in einem Referenz-Speicher des ersten Prozessors gespeichert, und die zweite Vielzahl von Pixeln bzw. die entsprechenden zweiten Daten wird zumindest zeitweise in einem Ergebnis-Speicher des zweiten Prozessors gespeichert.

Bevorzugt erfolgt der Vergleich der ersten Druckdaten (insbesondere der ersten Vielzahl von Pixeln) mit den zweiten Druckdaten (insbesondere der zweiten Vielzahl von Pixeln) (bzw. der entsprechenden ersten und zweiten Daten) durch ein mathematisches Verfahren.

Entsprechend kann zum Vergleich der ersten Vielzahl von Pixeln mit der zweiten Vielzahl von Pixeln ein mathematisches Verfahren verwendet werden, welches im Wesentlichen die jeweiligen Pixel der ersten Vielzahl von Pixeln mit den jeweiligen Pixeln der zweiten Vielzahl von Pixeln vergleicht. Entsprechend werden die erste und die zweite Vielzahl von Pixeln (bzw. die entsprechenden ersten und zweiten Daten) pixelweise (punktweise) verglichen, wobei eine Summe einer Betragsdifferenz der jeweiligen verglichenen Pixel zur Bewertung einer Qualität eines Aufdrucks herangezogen wird. Einem solchen Vergleich liegt insbesondere die Idee zugrunde, daß zwei identische Vielzahlen von Pixeln eine Betragsdifferenz von 0 haben, während ein Wert der Betragsdifferenz immer größer wird, je unterschiedlicher die beiden Vielzahlen von Pixeln sind. Entsprechend kann für eine Qualitätskontrolle eines Aufdrucks an einem Objekt angenommen werden, daß zwei (zumindest Bereichsweise) entsprechende Vielzahlen von Pixeln, wobei die erste Vielzahl von Pixeln eine Vorlage bzw. Steuerdaten für den Aufdruck und die zweite Vielzahl von Pixeln einem Ergebnis des Aufdrucks an dem Objekt (datenmäßig) entspricht, desto ähnlicher sind, je kleiner eine Betragsdifferenz wird. Bevorzugt kann ein Schwellenwert festgelegt werden, über den hinaus keine positive Qualitätskontrolle für einen Aufdruck an einen zentralen Computer zurück geliefert werden soll.

Weiterhin bevorzugt erfolgt der Vergleich der ersten Druckdaten (insbesondere der ersten Vielzahl von Pixeln bzw. entsprechenden ersten Daten) mit den zweiten Druckdaten (insbesondere der zweiten Vielzahl von Pixeln bzw. entsprechenden zweiten Daten) unter Berücksichtigung zumindest eines Ergebnisses aus einer vorangegangenen Trainingsphase (Englisch "Teach-in phase").

Entsprechend kann während einer Trainingsphase ein Bereich zumindest eines zu bedruckenden Objekts (insbesondere durch einen Benutzer) lokalisiert bzw. bestimmt werden, in welchem sich ein Aufdruck an dem Objekt im Wesentlichen befinden wird und von welchen entsprechend eine zweite Vielzahl von Pixeln bevorzugt durch eine Bilderfassungseinrichtung erzeugt wird. Somit kann eine solches Eingrenzen einerseits einen Ausschluß uninteressanter und störender Bildbereiche ermöglichen und kann andererseits eine erhebliche Steigerung einer Verarbeitungsgeschwindigkeit mit sich bringen. Entsprechend wird bevorzugt während der Trainingsphase von jedem erfaßten Trainingsbild nur ein ermittelter Arbeitsbereich (zumindest zeitweise) abgespeichert. Bevorzugt bildet ein solches abgespeichertes Trainingsbild bzw. der abgespeicherte Arbeitsbereich eine Art Wissensbasis, auf welche wiederholt zugegriffen werden kann, wenn eine Qualität eines Aufdrucks an einem Objekt durch den zweiten Prozessor zu bestimmen ist. Insbesondere kann entsprechend auf das Trainingsbild zugegriffen werden, um einen neuen, unbekannten Aufdruck an einem Objekt zu erkennen, welche von der Bilderfassungseinrichtung zu erfassen und in Form einer zweiten Vielzahl von Pixeln an den zweiten Prozessor zu übertragen ist.

Entsprechend bedarf ein System zur automatischen Kontrolle von zumindest einem zu bedruckenden Objekts im Wesentlichen keine Interaktionen und ist in der Lage eine Position eines jeden neu zu erfassenden Aufdrucks an jedem neuen Objekt automatisch zu erkennen. Ferner ist entsprechend einer solchen einer Qualitätskontrolle vorangehenden Trainingsphase ein langwieriges und teilweise fehlerhaftes "Einteachen" einer Position eines Aufdrucks an einem zu bedruckenden Objekt überflüssig.

Bevorzugter ist der erste Prozessor weiterhin ausgelegt, einen weiteren Referenz-Speicher für ein weiteres Objekt mit weiteren Druckdaten (insbesondere eine weitere Vielzahl von Pixeln) zu füllen bzw. Daten darin (zumindest zeitweise) zu speichern, während im Wesentlichen gleichzeitig die Qualität des Aufdrucks bestimmt wird.

Am meisten bevorzugt ist das Informationsübertragungsmittel weiterhin ausgelegt, einen der weiteren Druckdaten (insbesondere der weiteren Vielzahl von Pixeln bzw. enstprechenden weiteren Daten) entsprechenden weiteren Aufdruck an dem weiteren Objekt anzubringen, während im Wesentlichen gleichzeitig die Qualität des Aufdrucks bestimmt wird.

Weiterhin bevorzugt ist die ersten Druckdaten (insbesondere die erste Vielzahl von Pixeln) durch binäre Werte definiert, wobei die binären Werte bevorzugt 0 und 1 umfassen.

Weiterhin bevorzugt ist die zweiten Druckdaten (insbesondere die zweite Vielzahl von Pixeln) durch Graustufen definiert, wobei die Graustufen bevorzugt 256 Graustufen umfassen und wobei bevorzugter den Graustufen RGB-Werte mit R=G=B zugeordnet sind.

Weiterhin bevorzugt sind die ersten Druckdaten (insbesondere die erste Vielzahl von Pixeln) und/oder die zweiten Druckdaten (insbesondere die zweite Vielzahl von Pixeln) Rastergraphiken.

Entsprechend können erste und zweite Druckdaten Rastergraphiken und/oder Vektorgraphiken sein, wobei weiterhin bevorzugt die ersten und zweiten Druckdaten intern in einem Referenz-Speicher eines ersten Prozessors und/oder in einem Ergebnis-Speicher eines zweiten Prozessors als Vektorgraphiken gespeichert sein können, und zum Bedrucken eines Objekts mittels eines Informationsübertragungsmittels und/oder zum Erfassen eines Aufdrucks an einem Objekt mittels einer Erfassungseinrichtung in eine jeweilige entsprechende Rastergraphik umgewandelt werden.

Entsprechend der Erfindung ist weiterhin ein computer-impementiertes Verfahren zu einer automatischen Kontrolle von zumindest einem Objekt, insbesondere zur Verwendung mit einem System zur automatischen Kontrolle gemäß der Erfindung oder einer bevorzugten Ausführungsform hiervon, vorgesehen, welches folgende die Schritte umfaßt:
- Erfassen bzw. Erhalten zumindest eines aufzubringenden Druckbildes für das zumindest eine Objekt durch eine ersten Prozessor, mit folgenden Schritten:
   - Umwandeln des aufzubringenden Druckbildes in erste Druckdaten (erste Vielzahl von Pixeln bzw. in entsprechenden erste Daten) durch eine Verarbeitungseinrichtung;
   - (zumindest zeitweises bzw. temporäres) Speichern der ersten Druckdaten (ersten Vielzahl von Pixeln der entsprechenden ersten Daten) in einem digitalen Referenz-Speicher;
   - Übertragen der ersten Druckdaten (ersten Vielzahl von Pixeln bzw. der entsprechenden ersten Daten) an ein Informationsübertragungsmittel durch eine erste Ausgabeeinrichtung, wobei zumindest ein der ersten Druckdaten (ersten Vielzahl von Pixeln bzw. de entsprechenden ersten Daten) entsprechender Aufdruck an dem Objekt durch das Informationsübertragungsmittel angebracht wird; und
   - Übertragen der ersten Druckdaten (ersten Vielzahl von Pixeln bzw. der entsprechenden ersten Daten) an eine Vergleichseinrichtung durch eine zweite Ausgabeeinrichtung; und
- Erfassen dem Aufdruck entsprechenden zweite Druckdaten (zweite Vielzahl von Pixeln bzw. von entsprechenden zweiten Daten) durch einen zweiten Prozessor, mit folgenden Schritten:
   - (zumindest zeitweises bzw. temporäres) Speichern der zweiten Druckdaten (zweiten Vielzahl von Pixeln bzw. der entsprechenden zweiten Daten) in einem digitalen Ergebnis-Speicher; und
   - Bestimmen einer Qualität des Aufdrucks durch die Vergleichseinrichtung, und zwar durch (zumindest teilweisen) Vergleich der ersten Druckdaten (ersten Vielzahl von Pixeln bzw. der entsprechenden ersten Daten) mit den zweiten Druckdaten (zweiten Vielzahl von Pixeln bzw. mit den entsprechenden zweiten Daten).

Ein weiterer Aspekt der vorliegenden Erfindung betrifft ein Computerprogrammprodukt, insbesondere auf einem computerlesbaren Medium gespeichert oder als Signal verwirklicht, welches, wenn geladen in den Speicher eines Computers und ausgeführt von einem Computer, bewirkt, daß der Computer ein erfindungsgemäßes Verfahren oder eine bevorzugte Ausführungsform hiervon durchführt.

Diese und andere Objekte, Merkmale und Vorteile der vorliegenden Erfindung werden durch Lesen der folgenden detaillierten Beschreibung von bevorzugten Ausführungsformen und begleitenden Zeichnungen offensichtlicher werden. Es sollte so zu verstehen sein, daß selbst wenn Ausführungsformen separat beschrieben sind, einzelne Merkmale davon zu zusätzlichen Ausführungsformen kombiniert werden können.
Figur 1 zeigt ein Blockdiagramm eines technischen Aufbaus eines Systems und Verfahrens zur automatischen Kontrolle von zumindest einem zu bedruckenden Objekt.
Figur 2 zeigt ein Blockdiagramm eines technischen Aufbaus eines Computers und eines Netzwerkes, welcher bevorzugt in Verbindung mit der Erfindung verwendet werden kann.
Figur 3 zeigt ein Blockdiagramm eines technischen Aufbaus eines Systems und Verfahrens zur Überprüfung einer Lesbarkeit eines Aufdrucks an einem Objekt gemäß dem Stand der Technik.

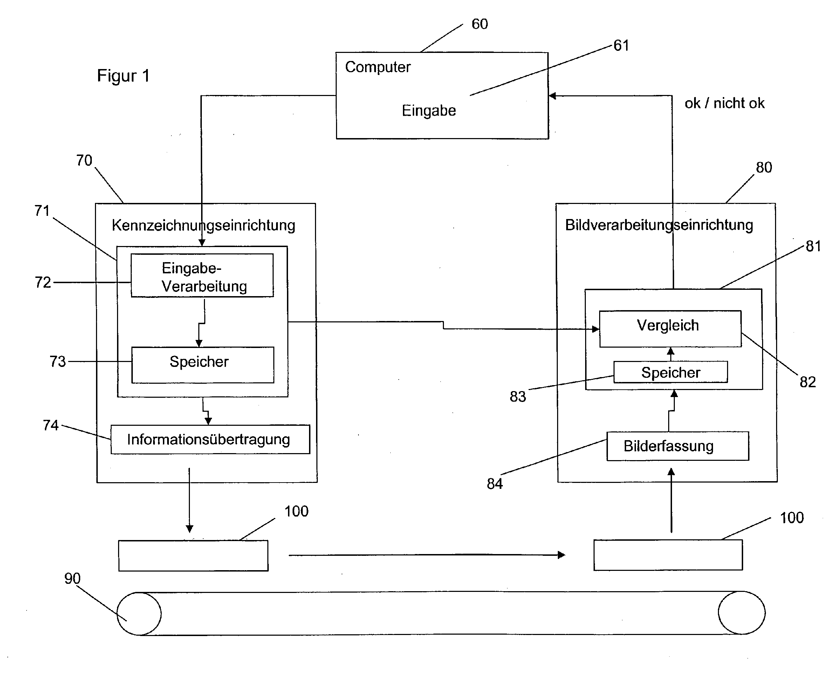

**Figur 1** zeigt eine bevorzugte Ausführungsform der vorliegenden Erfindung. Entsprechend ist ein System und Verfahren zur Kontrolle eines zu bedruckenden Objekts vorgesehen. Gemäß Figur 1 umfaßt das System einen Computer 60 zur Steuerung und Eingabeüberwachung des Systems, eine Kennzeichnungseinrichtung 70 (z.B. ein Drucker, eine Vorrichtung zur Kennzeichnung von Magnetbänder, Cipkarten, Computerchips, oder Metallplatten) zum Bedrucken zumindest eines zu bedruckenden Objekts 100 (z.B. einer Chargen-Nummer und/oder ein Verfallsdatum auf einer Arznei-Verpackung), welches entlang einer Zuführungseinrichtung 90 (z.B. ein Förderband einer Massenproduktionsanlage) transportiert bzw. geführt wird, und eine Bildverarbeitungseinrichtung 80 (z.B. umfassend eine Digitalkamera bzw. CCD-Kamera, eine Videokamera, und/oder einen Scanner) zur (zumindest teilweisen) Erfassung und/oder Überprüfung zumindest eines Aufdrucks an dem zu bedruckenden Objekt 100. Der Computer 60 umfaßt eine Eingabe 61, wie beispielsweise einen (z.B. durch eine Tastatur oder einen Bildschirm eingegebenen) Text und/oder einen Barcode (wie z.B. ein Strichcode, ein 2D-Code), welche durch einen entsprechenden Aufdruck an dem Objekt 100 anzubringen ist. Die Kennzeichnungseinrichtung 70 umfaßt einen ersten Prozessor 71, insbesondere eine Drucksteuereinheit, und ein Informationsübertragungsmittel 74, welcher eine Druckeinrichtung beispielsweise einen Druckkopf umfaßt.

Bevorzugt erfolgt das Bedrucken des zu bedruckenden Objekts 100 mittels zumindest eines Tintenstrahldruckkopfes, welcher durch die Informationsübertragungsmittel 74 entsprechend angesteuert wird. Bevorzugt kommt ein Kennzeichnungsverfahren und/oder eine Kennzeichnungsvorrichtung gemäß der Anmeldung DE 10 2004 032 937.0 zur Anwendung, die durch Bezugnahme in die vorliegende Beschreibung aufgenommen wird. Insbesondere können ein oder mehrere herkömmliche Tintenstrahldruckpatronen HP 6154a der Firma Hewlett & Packard, welche jeweils mit einer Frequenz von etwa 12 kHz drucken können, d.h. eine Kapillardüse kann aufgrund der nötigen Relaxation bzw. der Auffüllung mit Tinte der Kapillare durch Kapillareffekt nach etwa 80 µs angesteuert werden. Da die herkömmliche Tintenstrahldruckpatrone Tinte mittels Düsen auf das zu bedruckende Objekt 100 spritzt bzw. aufbringt, können mittels der herkömmlichen Tintenstrahldruckpatrone im wesentlichen Punkte gedruckt werden, welche aufgrund der Anordnung der Düsen vorzugsweise im wesentlichen parallel zu einer Druckrichtung DR angeordnet sind. Folglich sind die gedruckten Motive im wesentlichen aus Punkten aufgebaut. Aufgrund jeweils zweier versetzt zueinander angeordneter Düsenreihen bevorzugt von je einer HP Tintenstrahldruckpatrone sowie der Möglichkeit der frei programmierbaren Druckauslösung jeder einzelnen verwendeten Tintenstrahldruckpatrone, können die einzelnen Punkte je nach Parametrierung mehr oder weniger ineinander übergehen. Folglich bestehen die Motive im wesentlichen zwar aus einzelnen Punkten, es ist aber vorzugsweise nicht möglich, die einzelnen Punkte getrennt voneinander wahrzunehmen, weil die Punkte zu nahe aneinander liegen und/oder ineinander verlaufen sind. Das zu bedruckende Bild bzw. Motiv (bzw. die entsprechende Rasterpunkte) kann aus mehreren Bilder bzw. Motiven zusammengesetzt sein, die getrennt und/oder (zumindest teilweise) überlappend sein können. Insbesondere, kann ein (der Rastergraphik zumindest teilweise entsprechendes) Gesamtmotiv aus sequentiellem Druck einer Vielzahl von Einzelmotiven hergestellt sein. Weiterhin ist es ebenfalls möglich, daß die Vielzahl von Druckeinrichtungen auch Bereiche mehrfach bedrucken, d.h. daß beispielsweise eine Druckeinrichtung einen Bereich des zu bedruckenden Objekts 100 mehrfach bedruckt. Es können aber auch verschiedene Druckeinrichtungen einen Bereich des zu bedruckenden Objekts 100 bedrucken bzw. mehrfach bedrucken. Beispielsweise kann bei Farbdruck ein Bereich des zu bedruckenden Objekts 100 von mehreren Druckeinrichtungen bedruckt werden, welche beispielsweise ein identisches Motiv drucken, wobei sich die Farben der verwendeten Tinten der jeweiligen Druckeinrichtungen voneinander unterscheiden.

Der erste Prozessor 71 ist ausgelegt, die Eingabe 61 des Computer 60 zu erfassen. Weiterhin umfaßt der erste Prozessor 71 eine Eingabeverarbeitungseinrichtung 72 und einen Referenz-Speicher 73. Die Eingabeverarbeitungseinrichtung 73 ist ausgelegt, die erfaßte Eingabe 61 zu verarbeiten, wobei die Eingabe 61 bevorzugt in eine Vielzahl von Pixeln bzw. Bildpunkten, insbesondere eine Pixelgraphik oder Rastergraphik, umgewandelt wird.

Rastergraphiken bestehen bevorzugt aus einer matrix- bzw. tabellenförmigen Anordnung von Pixeln bzw. Bildpunkten, denen jeweils ein Farbwert bzw. eine Farbe zugeordnet ist. Entsprechend sind die Hauptmerkmale einer Rastergraphik eine Breite und eine Höhe in Pixeln, eine sogenannte Auflösung, und eine Farbtiefe. Eine Rastergraphik kann zu einer computergestützten Beschreibung komplexer Bilder, wie beispielsweise Fotos, verwendet werden. BMP, GIF, JPEG/JFIF, PNG und TIFF sind beispielsweise computer-basierte Formate für eine Speicherung von Rastergraphiken bzw. von diesen entsprechenden Daten.

In einer weiteren bevorzugten Ausführungsform wird eine Eingabe 61 durch die Eingabeverarbeitungseinrichtung 73 des ersten Prozessors 71 in eine Vektorgraphik umgewandelt. Ein Vektorgraphik besteht bevorzugt aus graphischen Primitiven (z.B. umfassend Linien, Kreise, und/oder Polygone). Um beispielsweise ein Bild eines Kreises zu speichern benötigt eine Vektorgraphik zumindest zwei Werte, eine Lage des Kreismittelpunktes und einen Durchmesser des Kreises. Zusätzlich zu solchen intrinsischen Werten werden bevorzugt auch noch eine Farbe, eine Strichstärke, ein Füllmuster und/oder weitere bzw. andere ein Layout bestimmende Werte angegeben. Bevorzugt wird eine Vektorgraphik für eine Ausgabe durch das Informationsübertragungsmittel in eine entsprechende Rastergraphik bevorzugt durch eine Rasterung (bzw. Rendern), wie beispielsweise der Bresenham-Algorithmus und/oder der De Casteljau-Algorithmus, umgewandelt.

Weiterhin bevorzugt kann eine aus einer Eingabe 61 erzeugten Rastergraphik in eine Vektorgraphik bevorzugt durch eine Vektorisierung konvertiert werden.

Vektorgraphik haben insbesondere gegenüber Rastergraphiken einen Vorteil, weil Vektorgraphiken zumindest im Wesentlichen stufenlos skaliert, verzerrt und/oder verändert zu werden. Außerdem können Vektorgraphiken stärker komprimiert werden, beispielsweise in MPEG7. Daher können Vektorgraphiken bevorzugt zur internen Speicherung einer Vorlage in dem Referenz-Speicher 73 und zur internen Speicherung einer Abbildung von einem Aufdruck an einem Objekt 100 in einem Ergebnis-Speicher 83 verwendet werden.

Die der Eingabe 61 entsprechende Rastergraphik wird in einem Referenz-Speicher 73 zumindest zeitweise bzw. temporär gespeichert. Insbesondere wird die Rastergraphik zumindest so lange in dem Referenz-Speicher 73 gespeichert, bis ein pixelweises oder bereichweises Bedrucken entsprechend der Rastergraphik des zu bedruckenden Objekt 100 durch die Kennzeichnungseinrichtung 70 zumindest im Wesentlichen bzw. eine Übertragung an eine (nachfolgend beschriebene) Vergleichseinrichtung 82 beendet ist. In einer bevorzugten Ausführungsform ist die Rastergraphik in dem Referenz-Speicher 73 durch Pixel dargestellt, welche binäre Werte, insbesondere 0 und 1, haben. Somit ist die in dem Referenz-Speicher 73 gespeicherte Rastergraphik durch eine Tabelle bzw. Matrix von Pixeln dargestellt, wobei für jeden möglichen Pixel angegeben ist, ob ein Pixel vorhanden ist, durch den Wert 1 dargestellt, oder ob ein Pixel nicht vorhanden ist, durch den Wert 0 dargestellt.

Der erste Prozessor 71 umfaßt weiterhin eine erste Ausgabeeinrichtung und eine zweite Ausgabeeinrichtung (beide nicht gezeigt). Die erste Ausgabeeinrichtung ist ausgelegt, die der Eingabe 61 entsprechende Rastergraphik an das Informationsübertragungsmittel 74 (im Sinne einer Schnittstelle) zu übertragen.

Entsprechend empfängt das Informationsübertragungsmittel 74 die Rastergraphik bzw. entsprechende erste Daten von dem ersten Prozessor 71, welcher einen der Rastergraphik zumindest teilweise entsprechenden Aufdruck an dem Objekt 100 anbringt und zwar bevorzugt durch ein pixelweises Drucken der Rastergraphik auf das zu bedruckende Objekt 100. Die zweite Ausgabeeinrichtung ist ausgelegt, die der Eingabe 61 entsprechende Rastergraphik an einen zweiten Prozessor 81 (im Sinne einer Schnittstelle) zu übertragen, welcher eine Vergleichseinrichtung 82 zum Abgleich bzw. Vergleich von zumindest zwei verschiedenen Rastergraphiken (bzw. von hierzu entsprechenden Daten) umfaßt. In einer bevorzugten Ausführungsform ist der zweite Prozessor in der Bildverarbeitungseinrichtung 80 lokalisiert bzw. dieser zugeordnet.

Das mit einem der Eingabe entsprechenden Aufdruck bedruckte Objekt 100 wird entlang der Zuführungseinrichtung 90, welches ein Förderband oder dgl. aufweist, transportiert bzw. geführt und passiert dabei die Bildverarbeitungseinrichtung 80.

In einer bevorzugten Ausführungsform umfaßt die Bildverarbeitungseinrichtung 80 eine Bilderfassungseinrichtung 84 und einen zweiten Prozessor 81, insbesondere eine Kontrolleinheit. Die Bilderfassungseinrichtung 84 ist ausgelegt, den an dem Objekt 100 angebrachten Aufdruck zu erfassen. Beispielsweise erzeugt die Bilderfassungseinrichtung 84 ein digitales Foto bzw. Bild des Aufdrucks bzw. von relevanten Bereichen hiervon. Der erfaßte Aufdruck wird durch eine Vielzahl von Pixeln bzw. Bildpunkten, insbesondere durch eine Pixelgraphik oder Rastergraphik dargestellt. Der zweite Prozessor 81 ist ausgelegt, die von der Bilderfassungseinrichung 84 erzeugte Rastergraphik des Aufdrucks an dem Objekt 100 zu erfassen bzw. zu detektieren. Weiterhin umfaßt der zweite Prozessor 81 einen Ergebnis-Speicher 83 und eine Vergleichseinrichtung 82. Bevorzugt wird die erfaßte Rastergraphik, welche von der Bilderfassungseinrichtung 84 erzeugt wurde, in dem Ergebnis-Speicher 83 (zumindest zeitweise) gespeichert.

In einer bevorzugten Ausführungsform ist die Rastergraphik in dem Ergebnis-Speicher 83 durch Pixel bzw. Bildpunkte dargestellt, welche Graustufen definieren.

Insbesondere können 256 verschiedene Graustufen (entsprechend einer 8 bit Auflösung) durch die Pixel dargestellt werden. Bevorzugt werden den Pixeln der Rastergraphik des Aufdrucks an dem Objekt 100, welche von der Bilderfassungseinrichtung 84 erzeugt bzw. detektiert wurden, im Wesentlichen über eine Farbtabelle mit RGB-Werten (d.h. jeweilige Anteile der Farben Rot (R), Grün (G) und Blau (B)) Werte mit R=G=B zugeordnet.

Die Vergleichseinrichtung 82 ist im Wesentlichen ausgelegt, die Rastergraphik (als bevorzugte erste Vielzahl von Pixeln), welche in dem Referenz-Speicher 73 gespeichert ist, mit der Rastergraphik (als bevorzugte zweite Vielzahl von Pixeln), welche in dem Ergebnis-Speicher 83 gespeichert ist, abzugleichen bzw. zu vergleichen, wobei die Vergleichseinrichtung 82 die Rastergraphik aus dem Referenz-Speicher 73 von dem ersten Prozessor 71 empfängt. Zum Vergleich der Rastergraphik, welche in dem Referenz-Speicher 73 gespeichert ist, und der Rastergraphik, welche in dem Ergebnis-Speicher 83 gespeichert ist, kann eines oder mehrere der folgenden geeignete mathematische Verfahren verwendet werden, welche in einer bevorzugten Ausführungsform im Wesentlichen pixelweise arbeiten.

Ein zum Abgleich der Rastergraphik in dem Referenz-Speicher 73 mit der Rastergraphik des Ergebnis-Speichers 83 verwendetes mathematisches Verfahren erfordert zumindest teilweise eine Entzerrung und/oder eine Transformation der Pixel einer in dem Ergebnis-Speicher 83 abgespeicherten Rastergraphik. Einerseits kann durch eine Bewegung des mit einem Aufdruck bedrucken Objekts 100 bei einer Führung entlang der Zuführungs- bzw. Druckrichtung DR beim Passieren der Bildverarbeitungseinrichtung 80 eine Aufnahme (Digitalfoto oder bewegtes Bild) des Aufdrucks aufgrund einer Bewegung des Objekts 100 verschmieren bzw. verschwimmen, so daß eine Entzerrung der im Wesentlichen der Aufnahme entsprechenden Rastergraphik notwendig wird. Andererseits ist die Rastergraphik im Referenz-Speicher 73 bevorzugt durch binäre Werte der entsprechenden Pixel beschrieben, während die Rastergraphik im Ergebnis-Speicher 83 bevorzugt durch Graustufen-Werte der entsprechenden Pixel beschrieben ist. Entsprechend kann eine entsprechende Konvertierung zwischen einer Darstellung der Rastergraphik im Referenz-Speicher 73 und einer Darstellung der Rastergraphik im Ergebnis-Speicher 83 vorgenommen werden.

In einer weiteren bevorzugten Ausführungsform kann alternativ oder zusätzlich zu einem pixelweisen Vergleich einer Rastergraphik, welche in dem Referenz-Speicher 73 gespeichert ist, und einer weiteren Rastergraphik, welche in dem Ergebnis-Speicher 83 gespeichert ist, ein regionenbasiertes Verfahren oder ein wissensbasiertes Verfahren verwendet werden. Ein regionenbasiertes Verfahren segmentiert entsprechend zu vergleichende Rastergraphiken zunächst unabhängig voneinander und vergleicht dann korrespondierende Regionen der zu vergleichenden Rastergraphiken bevorzugt anhand typischer Merkmale (wie z.B. einzelner Zeichen und/oder Striche eines Barcodes). Ein wissensbasiertes Verfahren ist im Wesentlichen im Gegensatz zu einem pixelweisen Vergleich oder einem regionenbasierten Verfahren nicht von Anfang an festgelegt, sondern ergibt sich suksessive aus Zwischenergebnissen. Beispielsweise kann dabei ein erster Vergleich zweier Rastergraphiken ein erstes Zwischenergebnis bzw. Informationen liefern, in deren Abhängigkeit dann ein nächster Bearbeitungsschritt ausgewählt werden kann, welcher dann wiederum ein zweites Zwischenergebnis liefert, welches zusammen mit dem ersten Zwischenergebnis als Grundlage für einen weiteren Bearbeitungsschritt dient. Bevorzugt können zudem Vorinformationen, wie beispielsweise einzelne Buchstaben und/oder Muster von Strichcodes in einer Wissensbasis gespeichert sein. Ein Beispiel einer wissensbasierten Bildinterpretation ist eine Bildinterpretation mit Hilfe eines Bayes-Netzes, denen die Bayes-Statistik mit ihren Regeln des Folgerns und Schießens zugrunde liegt.

Wird bevorzugt ein pixelweises Verfahren zum Vergleich einer ersten und einer zweiten Vielzahl von Pixeln verwendet, so werden im Wesentlichen die jeweiligen Pixel der ersten Vielzahl von Pixeln mit den jeweiligen Pixeln der zweiten Vielzahl von Pixeln vergleicht. Einem solchen Vergleich liegt insbesondere die Idee zugrunde, daß zwei identische Vielzahlen von Pixeln eine Betragsdifferenz von 0 haben, während ein Wert der Betragsdifferenz immer größer wird, je unterschiedlicher die beiden Vielzahlen von Pixeln sind. Entsprechend kann für eine Qualitätskontrolle eines Aufdrucks an einem Objekt angenommen werden, daß zwei (zumindest Bereichsweise) entsprechende Vielzahlen von Pixeln, wobei die erste Vielzahl von Pixeln eine Vorlage bzw. Steuerdaten für den Aufdruck und die zweite Vielzahl von Pixeln einem Ergebnis des Aufdrucks an dem Objekt (datenmäßig) entspricht, desto ähnlicher sind, je kleiner eine Betragsdifferenz wird. Bevorzugt kann ein Schwellenwert festgelegt werden. Wird bei einem Vergleich einer ersten Vielzahl von Pixeln und einer zweiten Vielzahl von Pixeln der Schwellenwert nicht erreicht, so liefert der zweite Prozessor 81 ein "OK" an den zentralen Computer 60 zurück. Wird hingegen bei einem solchen Vergleich von zwei verschieden Vielzahlen von Pixeln der Schwellenwert erreicht bzw. überschritten, so wird "nicht OK" an den zentralen Computer 60 von dem zweiten Prozessor 81 zurückgeliefert. Entsprechend hat damit ein entsprechenden Aufdruck an einem Objekt 100 eine bevorzugte Qualitätskontrolle nicht bestanden und wird aus einer entsprechenden Produktionscharge entfernt.

Demzufolge erfolgt eine Kontrolle bzw. Prüfung, ob der an einem Objekt 100 angebrachte Aufdruck, welcher einer Rastergraphik einer Eingabe 61 entspricht, bevorzugt durch einen pixelweisen Vergleich dieser Rastergraphik mit einer weiteren Rastergraphik, welche aus einem durch eine Bilderfassungseinrichtung 84 erfaßten digitalen Foto des Aufdrucks an dem Objekt 100 erzeugt wurde. Entsprechend ist keine sinnerfassende Prüfung (z.B. aufgrund einer OCR-Technik) der Lesbarkeit des Aufdrucks an dem Objekt 100 notwendig.

Bevorzugt werden für die zuvor beschriebe Erfassung (durch eine Bilderfassungseinrichtung 84) zumindest eines Aufdrucks an zumindest einem Objekt 100 einer Produktionscharge und dem zuvor beschriebenen Ab- bzw. Vergleich (durch eine Vergleichseinrichtung 82) zwischen einer Rastergraphik, welche in dem Referenz-Speicher 73 gespeichert ist und als Vorlage für ein Bedrucken des Objekts 100 durch das Infromationsübertragungsmittel 74 dient, und einer weiteren Rastergraphik, welche in dem Ergebnis-Speicher 83 gespeichert ist und einem erfaßten digitalen Foto bzw. Aufnahme des Aufdrucks an dem Objekt 100 entspricht, Ergebnisse von Abgleichen zwischen Rastergraphiken aus einer der Produktionscharge von dem zumindest einen zu bedruckenden Objekt 100 vorangegangenen Testphase herangezogen.

Entsprechend können Gemeinsamkeiten einer Vielzahl von Aufdrucken der Produktionscharge und aktuelle technische Gegebenheiten an und um die Kennzeichnungseinrichtung 70 erfaßt werden, so daß eine zumindest im Wesentlichen physikalisch und mathematisch ausreichend genau Beschreibung einerseits einer Bedruckung des Objekts 100 entsprechend einer Rastergraphik im Referenz-Speicher 73 durch das Informationsübertragungsmittel 74 und andererseits einer Erfassung des entsprechenden Aufdrucks an dem Objekt 100 durch die Bildverarbeitungseinrichtung 80 über die Bilderfassungseinrichtung 84 und eine Speicherung der entsprechenden Rastergraphik in dem Ergebnis-Speicher 83 vorliegt.

Weiterhin bevorzugt wird die Trainingsphase ("Teach-in" bzw. "Ein-Teach-" Phase) zumindest teilweise gemeinsam von dem ersten Prozessor 71 und dem zweiten Prozessor 81 durchgeführt. In der Trainingsphase übermittelt der zweite Prozessor 81 zumindest eine Rastergraphik von zumindest einer Eingabe 61 für die Produktionscharge an den ersten Prozessor 71. Der erste Prozessor 71 generiert aus der zumindest einen Rastergraphik eine entsprechende Mustergraphik und speichert die Mustergraphik in dem Referenz-Speicher 73 ab. Danach empfängt das Informationsübertragungsmittel 74 von dem ersten Prozessor die Mustergraphik, von welcher das Informationsübertragungsmittel 74 einen entsprechenden Aufdruck generiert und an einem Testobjekt als das zu bedruckende Objekt 100 anbringt. Abschließend wird der Aufdruck an dem Testobjekt 100 von der Bilderfassungseinrichtung 84 der Bildverarbeitungseinrichtung 80 erfaßt, in eine entsprechende Rastergraphik umgewandelt, an den zweiten Prozessor 81 übertragen und in dem Ergebnis-Speicher 83 (zumindest zeitweise) gespeichert. Dieser Vorgang bevorzugt wird mehrfach wiederholt.

Die oben beschriebene Trainingsphase wird durch den zweiten Prozessor 81 gesteuert bzw. geregelt, welcher aus jedem Testergebnis, welches aus einem jeweiligen Testlauf mit einem jeweiligen Testobjekt durch den zweiten Prozessor 81 ermittelt wurde, entsprechende Parameter ermittelt, welche für das oben beschriebene Abgleich-Verfahren vorteilhaft sind.

Dementsprechend muß eine zu überprüfende Eingabe 61 für ein Abgleich-Verfahren, welches in einer Vergleichseinrichtung 82 durchgeführt wird, nicht "eingeteacht" werden. Entsprechend werden gemäß der zuvor beschriebenen Trainingsphase Mustergraphiken verwendet, mit welchen die Bilderfassungseinrichtung 84 und die Vergleichseinrichtung 82 justiert werden.

Weiterhin bevorzugt kann ein Abgleich durch die Vergleichseinrichtung 83 des zweiten Prozessors 81 für einen Aufdruck an einem Objekt 100 erfolgen, während im Wesentlichen gleichzeitig ein Folgeobjekt (nicht gezeigt) entlang der Zuführungseinrichtung durch die Kennzeichnungseinrichtung 70 bedruckt werden kann. Entsprechend kann bereits eine einer Eingabe 61 entsprechenden Rastergraphik in dem Referenz-Speicher gespeichert werden, welche durch das Informationsübertragungsmittel 74 an dem Folgeobjekt anzubringen ist, während im Wesentlichen gleichzeitig ein Abgleich der Speichereinträge in dem Referenz-Speicher 73 und in dem Ergebnis-Speicher 83 für das Objekt 100 erfolgt.

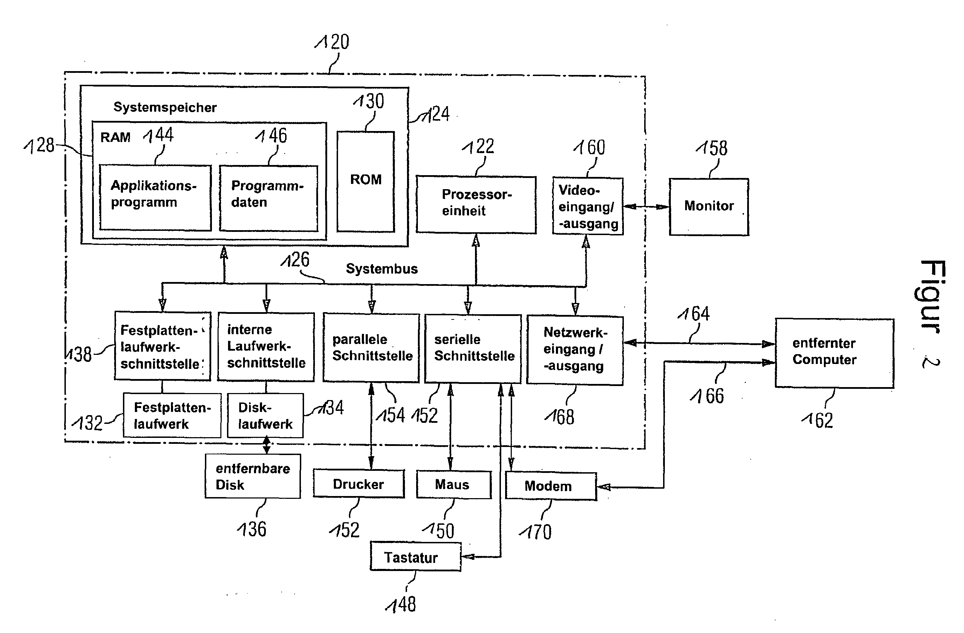

Bezugnehmend auf Figur 2 wird ein beispielhaftes System zum Implementieren der Erfindung bzw. einer bevorzugten Ausführungsform hiervon beschrieben. Ein beispielhaftes System umfaßt eine universelle Rechnereinrichtung in der Form einer herkömmlichen Rechnerumgebung 120 z.B. ein "personal computer" (PC) 120, mit einer Prozessoreinheit 122, einem Systemspeicher 124 und einem Systembus 126, welcher eine Vielzahl von Systemkomponenten, unter anderem den Systemspeicher 124 und die Prozessoreinheit 122 verbindet. Die Prozessoreinheit 122 kann arithmetische, logische und/oder Kontrolloperationen durchführen, indem auf den Systemspeicher 124 zugegriffen wird. Der Systemspeicher 124 kann Informationen und/oder Instruktionen zur Verwendung in Kombination mit der Prozessoreinheit 122 speichern. Der Systemspeicher 124 kann flüchtige und nichtflüchtige Speicher, beispielsweise "random access memory" (RAM) 128 und "Nur-Lesespeicher" (ROM) 130 beinhalten. Ein Grund-Eingabe-Ausgabe-System (BIOS), das die grundlegenden Routinen enthält, welche helfen, Informationen zwischen den Elementen innerhalb des PCs 120, beispielsweise während des Hochfahrens, zu transferieren, kann in dem ROM 130 gespeichert sein. Der Systembus 126 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 120 kann weiterhin ein Festplattenlaufwerk 132 zum Lesen oder Schreiben einer Festplatte (nicht gezeigt) aufweisen und ein externes Disklaufwerk 134 zum Lesen oder Schreiben einer entfernbaren Disk 136 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 132 und das externe Disklaufwerk 134 sind jeweils mit dem Systembus 126 über eine Festplattenlaufwerkschnittstelle 138 und eine externe Disklaufwerkschnittstelle 140 verbunden. Die Laufwerke und die zugeordneten computerlesbaren Medien stellen einen nichtflüchtigen Speicher computerlesbarer Instruktionen, Datenstrukturen, Programm-Modulen und anderer Daten für den PC 120 zur Verfügung. Die Datenstrukturen können die relevanten Daten zum Implementieren eines wie oben beschriebenen Verfahrens aufweisen. Obwohl die beispielshaft beschriebene Umgebung eine Festplatte (nicht gezeigt) und eine externe Disk 142 verwendet, ist für den Fachmann offensichtlich, daß andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw..

Eine Vielzahl von Programm-Modulen, insbesondere ein Betriebssystem (nicht gezeigt) ein oder mehrere Applikationsprogramme 144, oder Programm-Module (nicht gezeigt) und Programmdaten 146, können auf der Festplatte, der externen Disk 142, dem ROM 130 oder dem RAM 128 gespeichert werden. Die Applikationsprogramme können zumindest einen Teil der Funktionalität, wie in Figur 2 gezeigt, umfassen.

Ein Benutzer kann Kommandos und Information, wie oben beschrieben, in den PC 120 anhand von Eingabevorrichtungen, wie z.B. einer Tastatur bzw. eines Keyboards 148 und einer Computermaus bzw. einem Trackball 150 eingeben. Andere Eingabevorrichtungen (nicht gezeigt) können ein Mikrofon und/andere Sensoren, einen Joystick, ein Spielpolster bzw. -kissen, einen Scanner oder ähnliches umfassen. Diese oder andere Eingabevorrichtungen können mit der Prozessoreinheit 122 anhand einer seriellen Schnittstelle 152 verbunden sein, welche mit dem System 126 gekoppelt ist, oder können anhand anderer Schnittstellen, wie z.B. einer parallelen Schnittstelle 154, eines Spieleports oder eines universellen seriellen Busses (USB) verbunden sein. Weiterhin kann Information mit einem Drucker 156 gedruckt werden. Der Drucker 156 und andere parallele Eingabe/Ausgabevorrichtungen können mit der Prozessoreinheit 122 durch die parallele Schnittstelle 154 verbunden sein. Ein Monitor 158 oder andere Arten von Anzeigevorrichtung(en) ist/sind mit dem Systembus 126 mittels einer Schnittstelle, wie z.B. eines Videoeingang/-ausgangs 160 verbunden. Zusätzlich zu dem Monitor kann die Rechnerumgebung 120 andere periphere Ausgabevorrichtungen (nicht gezeigt) wie z.B. Lautsprecher oder akustische Ausgänge umfassen.

Die Rechnerumgebung 120 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 120 in einer vernetzten Umgebung arbeiten, wobei Verbindungen zu einem oder mehreren elektronischen Vorrichtungen verwendet werden. Figur 2 stellt die mit einem "remote computer" bzw. entfernten Computer 162 vernetzte Rechnerumgebung dar. Der entfernte Computer 162 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 120 oben beschriebenen Elemente umfassen. Die logischen Verbindungen, wie sie in Figur 2 dargestellt sind, umfassen ein "local area network" (LAN) 164 und ein "wide are network" (WAN) 166. Solche Netzwerkumgebungen sind alltäglich in Büros, firmenweiten Computernetzwerken, Intranetzen und dem Internet.

Wenn eine Rechnerumgebung 120 in einer LAN-Netzwerkumgebung verwendet wird, kann die Rechnerumgebung 120 mit dem LAN 164 durch einen Netzwerkeingang/-ausgang 168 verbunden sein. Wenn die Rechnerumgebung 120 in einer WAN-Netzwerkumgebung verwendet wird, kann die Rechnerumgebung 120 ein Modem 170 oder andere Mittel zum Herstellen einer Kommunikation über das WAN 166 umfassen. Das Modem 170, welches intern und extern bezüglich der Rechnerumgebung 120 sein kann, ist mit dem Systembus 126 mittels der seriellen Schnittstelle 152 verbunden. In der Netzwerkumgebung können Programm-Module, welche relativ zu der Rechnerumgebung 120 dargestellt sind, oder Abschnitte davon in einer entfernten Speichereinrichtung gespeichert sein, welche an oder von einem entfernten Computer 162 zugreifbar bzw. systemeigen sind. Weiterhin können andere Daten, welche für das oben beschriebene Verfahren bzw. System relevant sind, auf oder von dem entfernten Computer 162 zugreifbar vorliegen.

### Bezugszeichenliste

- 10; 60: Computer
- 11; 61: Eingabe
- 20; 70: Kennzeichnungseinrichtung
- 71: erster Prozessor
- 21; 72: Eingabeverarbeitungseinrichtung
- 22: Speicher
- 73: Referenz-Speicher
- 23; 74: Informationsübertragungsmittel
- 30; 80: Bildverarbeitungseinrichtung
- 31: Überprüfungseinrichtung
- 32; 84: Bilderfassungseinrichtung
- 81: zweiter Prozessor
- 82: Vergleichseinrichtung
- 83: Ergebnis-Speicher
- 40; 90: Zuführungseinrichtung
- 50;100: Objekt
- 51; 101: bedrucktes Objekt
- 120: Rechnerumgebung
- 122: Prozessoreinheit
- 124: Systemspeicher
- 126: Systembus
- 128: random access memory (RAM)
- 130: Nur-Lesespeicher (ROM)
- 132: Festplattenlaufwerk
- 134: Disklaufwerk
- 136: entfernbare Disk
- 138: Festplattenlaufwerkschnittstelle
- 140: Disklaufwerkschnittstelle
- 142: externe Disk
- 144: Applikationsprogramm
- 146: Programmdaten
- 148: Tastatur
- 150: Computermaus/Trackball
- 152: serielle Schnittstelle
- 154: parallele Schnittstelle
- 156: Drucker
- 158: Monitor
- 160: Videoeingang/ -ausgang
- 162: entfernter Computer
- 164: "local area network" (LAN)
- 166: "wide area network" (WAN)
- 168: Netzwerkeingang/ -ausgang

## Patentansprüche

1. System zur automatischen Kontrolle von zumindest einem zu bedruckenden Objekt (100), umfassend:
- einen ersten Prozessor (71), welcher ausgelegt ist, zumindest ein aufzubringendes Druckbild für das zumindest eine Objekt (100) zu erfassen, umfassend:
● - eine Verarbeitungseinrichtung (72), welche ausgelegt ist, das aufzubringende Druckbild in erste Druckdaten umzuwandeln;
● - einen digitalen Referenz-Speicher (73), welcher ausgelegt ist, die ersten Druckdaten zu speichern;
● - eine erste Ausgabeeinrichtung, welche ausgelegt ist, die ersten Druckdaten an ein Informationsübertragungsmittel (74) zu übertragen, wobei das Informationsübertragungsmittel (74) ausgelegt ist, zumindest einen der ersten Druckdaten entsprechenden Aufdruck an dem Objekt (100) anzubringen; und
● - eine zweite Ausgabeeinrichtung, welche ausgelegt ist, die erste Druckdaten an eine Vergleichseinrichtung (82) zu übertragen; und
- einen zweiten Prozessor (81), welcher ausgelegt ist, dem Aufdruck entsprechende zweite Druckdaten zu erfassen, umfassend:
● - einen digitalen Ergebnis-Speicher (83), welcher ausgelegt ist, die zweite Druckdaten zu speichern; und
● - die Vergleichseinrichtung (82), welche ausgelegt ist, eine Qualität des Aufdrucks zu bestimmen und zwar durch Vergleich der ersten Druckdaten mit den zweiten Druckdaten.

2. System nach Anspruch 1, wobei der Vergleich der ersten Druckdaten mit den zweiten Druckdaten durch ein mathematisches Verfahren erfolgt.

3. System nach Anspruch 1 oder 2, wobei der Vergleich der ersten Druckdaten mit den zweiten Druckdaten unter Berücksichtigung zumindest eines Ergebnisses aus einer vorangegangenen Trainingsphase erfolgt.

4. System nach einem oder mehreren der vorangegangenen Ansprüche, wobei der erste Prozessor (71) weiterhin ausgelegt ist, einen weiteren Referenz-Speicher (73) für ein weiteres Objekt mit weiteren Druckdaten zu füllen, während im Wesentlichen gleichzeitig die Qualität des Aufdrucks an dem Objekt (100) bestimmt wird.

5. System nach Anspruch 4, wobei das Informationsübertragungsmittel (74) weiterhin ausgelegt ist, einen den weiteren Druckdaten entsprechenden weiteren Aufdruck an dem weiteren Objekt anzubringen, während im Wesentlichen gleichzeitig die Qualität des Aufdrucks an dem Objekt (100) bestimmt wird.

6. System nach einem oder mehreren der vorangegangenen Ansprüche, wobei die erste Druckdaten durch binäre Werte definiert sind.

7. System nach Anspruch 6, wobei die binären Werte 0 und 1 umfassen.

8. System nach einem oder mehreren der vorangegangenen Ansprüche, wobei die zweite Druckdaten durch Graustufen definiert sind.

9. System nach Anspruch 8, wobei die Graustufen 256 Graustufen umfassen.

10. System nach Anspruch 8 oder 9, wobei den Graustufen RGB-Werte mit R=G=B zugeordnet sind.

11. System nach einem oder mehreren der vorangegangenen Ansprüche, wobei die erste Druckdaten und die zweite Druckdaten Rastergraphiken sind.

12. Computer-implementiertes Verfahren zur automatischen Kontrolle von zumindest einem Objekt, die Schritte umfassend:
- Erfassen zumindest eines aufzubringenden Druckbildes für das zumindest eine Objekt (100) durch eine ersten Prozessor (71), die Schritte umfassend:
● - Umwandeln des aufzubringenden Druckbildes in erste Druckdaten durch eine Verarbeitungseinrichtung (72);
● - Speichern der ersten Druckdaten in einem digitalen Referenz-Speicher (73);
● - Übertragen der ersten Druckdaten an ein Informationsübertragungsmittel (74) durch eine erste Ausgabeeinrichtung, wobei zumindest ein der ersten Druckdaten entsprechender Aufdruck an dem Objekt (100) durch das Informationsübertragungsmittel (74) angebracht wird; und
● - Übertragen der ersten Druckdaten an eine Vergleichseinrichtung (82) durch eine zweite Ausgabeeinrichtung; und
- Erfassen einer dem Aufdruck entsprechende zweite Druckdaten durch einen zweiten Prozessor (81), die Schritte umfassend:
● - Speichern der zweiten Druckdaten in einem digitalen Ergebnis-Speicher (83); und
● - Bestimmen einer Qualität des Aufdrucks durch die Vergleichseinrichtung (82) und zwar durch Vergleich der ersten Druckdaten mit den zweiten Druckdaten.

13. Computer-implementiertes Verfahren nach Anspruch 12, wobei der Vergleich der ersten Druckdaten mit den zweiten Druckdaten durch ein mathematisches Verfahren erfolgt.

14. Computer-implementiertes Verfahren nach Anspruch 12 oder 13, wobei der Vergleich der ersten Druckdaten mit den zweiten Druckdaten unter Berücksichtigung zumindest eines Ergebnisses aus einer vorangegangenen Trainingsphase erfolgt.

15. Computer-implementiertes Verfahren nach einem oder mehreren der Ansprüche 12 bis 14, weiterhin den Schritt umfassend: Füllen eines weiteren Referenz-Speichers (73) für ein weiteres Objekt mit weiteren Druckdaten durch den erste Prozessor (71), während im Wesentlichen gleichzeitig die Qualität des Aufdrucks an dem Objekt (100) bestimmt wird.

16. Computer-implementiertes Verfahren nach Anspruch 16, weiterhin den Schritt umfassend: Anbringen eines den weiteren Druckdaten entsprechenden weiteren Aufdruckes an dem weiteren Objekt durch das Informationsübertragungsmittel (74), während im Wesentlichen gleichzeitig die Qualität des Aufdrucks an dem Objekt (100) bestimmt wird.

17. Computer-implementiertes Verfahren nach einem oder mehreren der Ansprüche 12 bis 16, wobei die erste Druckdaten durch binäre Werte definiert sind.

18. Computer-implementiertes Verfahren nach Anspruch 17, wobei die binären Werte 0 und 1 umfassen.

19. Computer-implementiertes Verfahren nach einem oder mehreren der Ansprüche 12 bis 18, wobei die zweite Druckdaten durch Graustufen definiert sind.

20. Computer-implementiertes Verfahren nach Anspruch 19, wobei die Graustufen 256 Graustufen umfassen.

21. Computer-implementiertes Verfahren nach Anspruch 19 oder 20, wobei den Graustufen RGB-Werte mit R=G=B zugeordnet sind.

22. Computer-implementiertes Verfahren nach einem oder mehreren der Ansprüche 12 bis 21, wobei die erste Druckdaten und die zweite Druckdaten Rastergraphiken sind.

23. Computerprogrammprodukt umfassend computerlesbare Befehle, die, wenn geladen in den Speicher eines Computers und ausgeführt von einem Computer, bewirken, daß der Computer ein Verfahren nach einem oder mehreren der Ansprüche 12 bis 22 durchführt.
